# FASCICULE DE BREVET EUROPEEN

(11) **EP 2 741 406 B1**
(45) Date de publication et mention de la délivrance du brevet: **22.01.2020**
(21) Numéro de dépôt: 13195544.5
(22) Date de dépôt: 03.12.2013
(51) Int. Cl.: H02K 37/04, H02K 16/02

(54) **Moteur pas à pas à double rotor**
Schrittschaltmotor mit Doppelrotor
Stepping motor with double rotor

(30) Priorité: 05.12.2012 FR 1203295
(43) Date de publication de la demande: 11.06.2014
(73) Titulaire: Thales, 92400 Courbevoie (FR)
(72) Inventeur: Vezain, Stéphane, 06156 Cannes La Bocca Cedex (FR); Baudasse, Yannick, 06156 Cannes La Bocca Cedex (FR); Gafari, Yasmina, 06156 Cannes La Bocca Cedex (FR)
(74) Mandataire: Collet, Alain

(56) Documents cités:
- FR-A1- 2 724 783
- US-A1- 2010 066 184
- US-B1- 6 700 272

## Description

L'invention se situe dans le domaine des actionneurs mécaniques de précision. Elle concerne un moteur pas à pas à forte précision et peut notamment être utilisée dans les mécanismes d'actionnement des satellites artificiels.

Les satellites artificiels nécessitent généralement de nombreux dispositifs d'actionnement. Ces dispositifs peuvent notamment servir à déployer des panneaux depuis une configuration de stockage vers une configuration déployée, à orienter des mécanismes de pointage dans différentes directions, ou à actionner des éléments d'instruments optiques tels que des miroirs. De manière générale, le contexte spatial impose des contraintes en termes de consommation électrique, de fiabilité, de poids et d'encombrement. De plus, les dispositifs d'actionnement doivent souvent présenter une forte précision, c'est-à-dire une faible résolution angulaire dans le cas de moteurs rotatifs. Les moteurs pas à pas sont couramment utilisés comme actionneurs mécaniques pour les applications aérospatiales. En effet, ce type de moteur présente plusieurs avantages, comme un faible frottement, une possibilité de maintien en position sans consommation électrique, et une simplicité de commande. En particulier, aucun asservissement n'est nécessaire pour maintenir une position particulière. Les moteurs pas à pas présentent en outre une faible résolution angulaire, pouvant atteindre quelques dixièmes de degrés. Cependant, une diminution de la résolution angulaire s'accompagne d'une augmentation de l'encombrement et de la masse du moteur. De plus, des résolutions angulaires plus fines peuvent être nécessaires. Une solution consiste à ajouter un réducteur mécanique en sortie du moteur pas à pas. L'introduction d'un réducteur implique néanmoins une diminution du rendement énergétique du fait des frottements qu'il implique, et une augmentation du poids et de l'encombrement. Une autre solution consiste à commander le moteur pas à pas en micropas. Cette solution nécessite une électronique plus coûteuse, et ne permet pas de maintenir un couple de maintien sans alimentation.

Le brevet US6700272 décrit un moteur à réluctance comprenant un stator, un rotor et un rotor intermédiaire dans lequel les dents du stator n'ont pas le même pas que les dents du rotor lui faisant face.

Le document US2010/0066184 décrit une machine électrique rotative comprenant un stator et un rotor disposant de paires de pôles magnétiques ayant des dents réparties selon un pas régulier mais différent des pas des dents des pôles du stator.

Le brevet FR2724783 décrit un micro-moteur pas-à-pas comprenant un stator et un rotor présentant le même nombre de dents polaires.

Un but de l'invention est notamment de remédier à tout ou partie des inconvénients précités en proposant un moteur pas à pas offrant une très faible résolution angulaire tout en présentant une conception mécanique et une commande électronique simples, un encombrement limité, et une possibilité de maintien en position sans consommation électrique. A cet effet, l'invention a pour objet un moteur pas à pas à double rotor présentant un mouvement différentiel. Plus précisément, l'invention a pour objet un moteur pas à pas comprenant :
- un stator comprenant N plots statoriques, où N est un entier supérieur ou égal à trois,
- un premier rotor apte à se déplacer par rapport au stator selon un axe, le premier rotor comprenant un premier ensemble de dents réparties selon un premier pas p₁, et un deuxième ensemble de dents réparties selon un deuxième pas p₂, et
- un deuxième rotor apte à se déplacer par rapport au premier rotor selon l'axe, le deuxième rotor comprenant N plots rotoriques,
les N plots statoriques comprenant une pluralité a de dents réparties selon le pas p₁, où a est un entier, les N plots statoriques étant répartis sur le stator selon un troisième pas égal à p₁(a+1/N), les dents du premier ensemble étant aptes à venir s'aligner individuellement avec l'un des plots statoriques, le passage d'un alignement à un alignement consécutif entraînant un déplacement du premier rotor par rapport au stator dans un premier sens avec le pas p₁/N,
les N plots rotoriques comprenant une pluralité b de dents réparties selon le pas p₂, où b est un entier, les N plots rotoriques étant répartis sur le deuxième rotor selon un quatrième pas égal à p₂(b+1/N) et étant aptes à venir s'aligner individuellement avec l'une des dents du deuxième ensemble, le passage d'un alignement à un alignement consécutif entraînant un déplacement du deuxième rotor par rapport au premier rotor dans un deuxième sens, opposé au premier, avec le pas p₂/N.

Selon une forme particulière de réalisation, les mouvements entre le stator, le premier rotor, et le deuxième rotor sont des mouvements de rotation selon l'axe.

Chaque plot statorique peut comprendre une première portion d'anneau dont une surface intérieure est dentée avec le pas p₁, les dents de la portion d'anneau étant aptes à venir s'aligner avec des dents du premier ensemble du premier rotor. Chaque plot statorique peut aussi comprendre une deuxième portion d'anneau dont une surface intérieure est dentée avec le pas p₁, la deuxième portion d'anneau étant disposée symétriquement selon l'axe par rapport à la première portion d'anneau, les dents de la deuxième portion d'anneau étant aptes à venir s'aligner avec des dents du premier ensemble du premier rotor. Le premier rotor et le deuxième rotor peuvent alors comporter chacun N anneaux concentriques répartis le long de l'axe et isolés électromagnétiquement les uns des autres, les première et deuxième portions d'anneau de chaque plot statorique s'alignant avec l'un des anneaux du premier rotor et avec l'un des anneaux du deuxième rotor, de manière à permettre la circulation d'un champ magnétique entre la première portion d'anneau et la deuxième portion d'anneau.

Selon une forme particulière de réalisation, le premier rotor comprend deux parties solidaires en rotation selon l'axe, chaque partie comportant N anneaux concentriques répartis le long de l'axe et isolés électromagnétiquement les uns des autres, une surface extérieure de chaque anneau comprenant des dents réparties selon le pas p₁ et alignées entre les différents anneaux, une surface intérieure de chaque anneau comprenant des dents réparties selon le pas p₂ et alignées entre les différents anneaux, le deuxième rotor comprenant deux parties solidaires en rotation selon l'axe, chaque partie du deuxième rotor comportant N anneaux concentriques répartis le long de l'axe et isolés électromagnétiquement les uns des autres, une surface extérieure de chaque anneau comprenant des dents réparties selon le pas p₂ et décalées par rapport aux dents des autres anneaux du pas p'₂, chaque anneau du premier rotor venant s'aligner avec l'un des anneaux du deuxième rotor.

En outre, chaque plot statorique peut comprendre quatre portions d'anneau concentriques, chaque portion d'anneau étant dentée avec le pas p₁, pour chaque plot statorique, une première portion d'anneau et une deuxième portion d'anneau étant disposées symétriquement selon l'axe et venant coopérer avec l'un des anneaux de la première partie du premier rotor et avec l'un des anneaux de la première partie du deuxième rotor, une troisième portion d'anneau et une quatrième portion d'anneau étant disposées symétriquement selon l'axe et venant coopérer avec l'un des anneaux de la deuxième partie du premier rotor et avec l'un des anneaux de la deuxième partie du deuxième rotor.

L'invention a notamment pour avantage qu'elle permet au moteur pas à pas d'être commandé en pas plein tout en présentant un très faible mouvement angulaire entre le deuxième rotor et le stator entre deux phases d'alimentation successives.

L'invention sera mieux comprise et d'autres avantages apparaîtront à la lecture de la description qui va suivre, faite en regard de dessins annexés sur lesquels :
- la figure 1 représente, sous forme d'un schéma synoptique simplifié, un premier exemple de moteur pas à pas selon l'invention ;
- les figures 2 à 6 illustrent le fonctionnement du moteur pas à pas de la figure 1 lors de différentes phases d'alimentation ;
- la figure 7 représente un deuxième exemple de moteur pas à pas selon l'invention ;
- les figures 8 et 9 représentent, respectivement dans une vue en perspective et dans une vue en coupe, un stator du moteur pas à pas de la figure 7 ;
- la figure 10 représente une partie d'un rotor intermédiaire du moteur pas à pas de la figure 7 ;
- la figure 11 représente une partie d'un rotor central du moteur pas à pas de la figure 7 ;
- la figure 12 illustre, dans une vue en coupe longitudinale, le fonctionnement du moteur pas à pas de la figure 7.

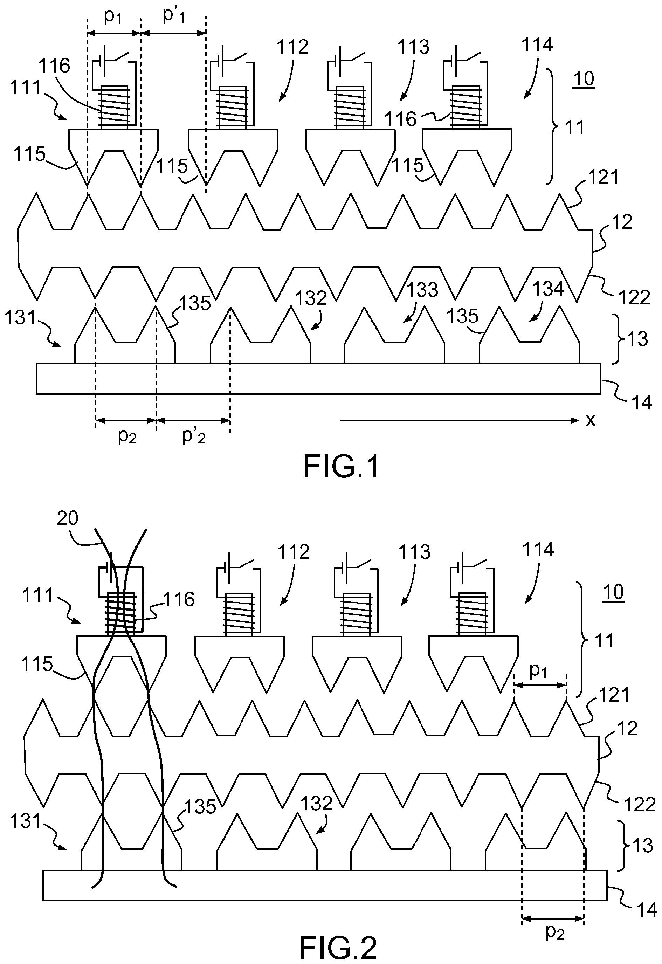

La figure 1 représente, sous forme d'un schéma synoptique simplifié, un premier exemple de moteur pas à pas selon l'invention. Le moteur est représenté ici comme étant un moteur linéaire. Cependant, il pourrait également s'agir d'un moteur rotatif dans une représentation à plat. Le moteur pas à pas 10 représenté sur la figure 1 comprend un stator 11, un premier rotor 12, et un deuxième rotor 13 comportant un aimant permanent 14. Le stator 11 comporte quatre plots statoriques 111 à 114. Chaque plot statorique 111-114 comprend deux dents 115 espacées l'une de l'autre d'un pas p₁, et une bobine 116 pouvant être alimentée par un courant électrique afin de créer un champ électromagnétique. Les plots statoriques 111-114 sont répartis sur le stator 11 selon un pas p₁(2+1/N). Plus précisément, les plots statoriques sont disposés de manière à ce que l'une des dents 115 d'un plot statorique 111-114 soit située à une distance p'₁ d'un plot statorique contigu. Le pas p'₁ est déterminé en fonction du pas p₁ et du nombre N de plots statoriques. Il est égal à (1+1 /N).p₁, soit dans l'exemple de la figure 1, (1+1/4).p₁. Le premier rotor 12, également appelé rotor intermédiaire, est en liaison glissière par rapport au stator 11 selon un axe X (ou en liaison pivot selon un axe orthogonal à l'axe X dans le cas d'un moteur rotatif). La liaison glissière doit être entendue au sens large, c'est-à-dire que la liaison doit comprendre au moins un degré de liberté en translation selon l'axe X. Le rotor intermédiaire 12 comprend un premier ensemble de dents 121 réparties selon le pas p₁ et venant en vis-à-vis des dents 115 des plots statoriques 111-114. Du fait de la différence entre les pas p₁ et p'₁, les dents 115 de tous les plots statoriques 111-114 ne peuvent pas venir s'aligner simultanément avec les dents 121 du rotor intermédiaire 12. À chaque pas du moteur, deux dents 121 viennent s'aligner avec les dents 115 de l'un des plots statoriques 111-114. Le rotor intermédiaire 12 comprend en outre un deuxième ensemble de dents 122 réparties selon un pas p₂, différent du pas p₁. Le deuxième rotor 13, également appelé rotor central, est en liaison glissière par rapport au rotor intermédiaire 12 selon l'axe X (ou en liaison pivot dans le cas d'un moteur rotatif). Il est donc également en liaison glissière par rapport au stator 11. Le rotor central 13 comprend quatre ensembles 131 à 134 de dents 135, appelés plots rotoriques, par analogie avec les plots statoriques 111-114. De manière générale, le rotor central 13 comprend N plots rotoriques, soit autant de plots rotoriques que de plots statoriques. Chaque plot rotorique 131-134 comprend deux dents 135 espacées l'une de l'autre du pas p₂. Les plots rotoriques 131-134 sont répartis selon un pas p₂(2+1/N). Plus précisément, les plots rotoriques sont disposés de manière à ce que l'une des dents 135 d'un plot rotorique 131-134 soit située à une distance p'₂ d'un plot rotorique contigu. Le pas p'₂ est déterminé en fonction du pas p₂ et du nombre N de plots rotoriques et statoriques. Il est égal à (1+1/N).p₂, soit dans l'exemple de la figure 1, (1+1/4).p₂. Du fait de la différence entre les pas p₂ et p'₂, les dents 135 de tous les plots rotoriques 131-134 ne peuvent pas venir s'aligner simultanément avec les dents 122 du rotor intermédiaire 12. À chaque pas du moteur, deux dents 122 viennent s'aligner avec les dents 135 de l'un des plots rotoriques 131-134. L'aimant permanent 14 est accolé au rotor central 13 de manière à créer ou augmenter la circulation du courant magnétique entre les plots statoriques 111-114 et les plots rotoriques 131-134.

Les figures 2 à 6 illustrent le fonctionnement du moteur pas à pas 10 schématisé sur la figure 1 lors de ses phases d'alimentation successives. Une phase correspond à une période de temps pendant laquelle une bobine 116 de l'un des plots statoriques 111-114 est alimentée. La bobine elle-même peut également être appelée "phase". Durant chaque phase, le rotor intermédiaire 12 et le rotor central 13 se positionnent de manière à minimiser la réluctance entre l'un des plots statoriques 111-114 et le plot rotorique 131-134 correspondant. La figure 2 représente les positions respectives du stator 11, du rotor intermédiaire 12 et du rotor central 13 lors d'une première phase, en l'occurrence lorsque la bobine 116 du plot statorique 111 est alimentée. Afin de minimiser la réluctance entre le plot statorique 111 et le plot rotorique 131, deux dents 121 du rotor intermédiaire 12 viennent s'aligner avec les dents 115 du plot statorique 111, et deux dents 122 du rotor intermédiaire 12 viennent s'aligner avec les dents 135 du plot rotorique 131. Le champ magnétique 20 établi entre le plot statorique 111 et le plot rotorique 131 est alors maximal.

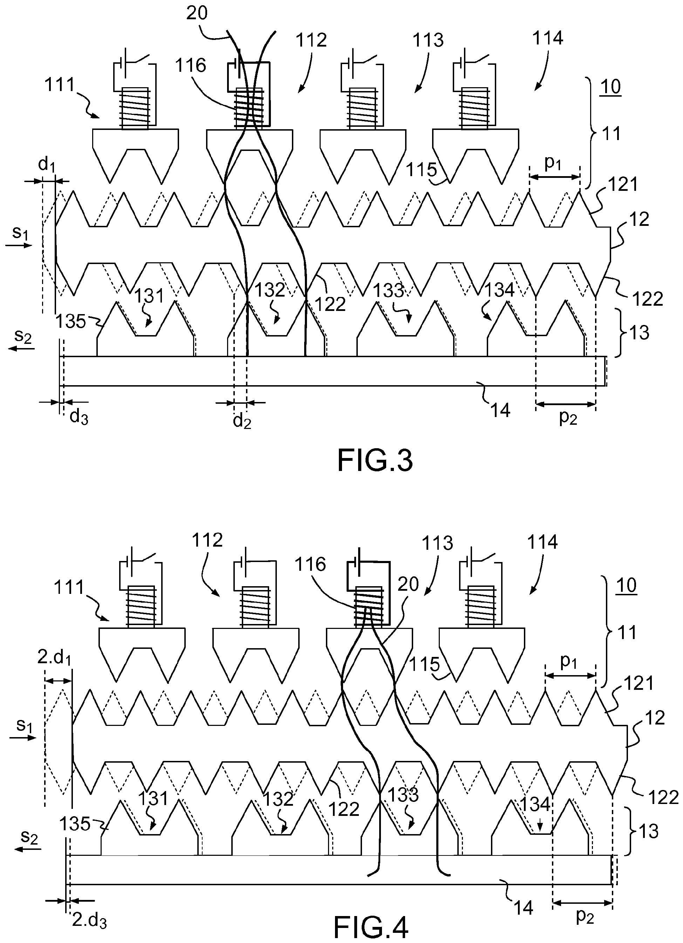

La figure 3 représente le moteur pas à pas 10 lors de la deuxième phase, c'est-à-dire lorsque la bobine 116 du deuxième plot statorique 112 est alimentée. Les positions du rotor intermédiaire 12 et du rotor central 13 lors de la première phase sont représentées en traits interrompus. Afin de minimiser la réluctance entre le plot statorique 112 et le plot rotorique 132, deux dents 121 du rotor intermédiaire 12 viennent s'aligner avec les dents 115 du plot statorique 112, et deux dents 122 du rotor intermédiaire 12 viennent s'aligner avec les dents 135 du plot rotorique 132. De manière classique, le passage du premier alignement entre les dents 115 du plot statorique 111 et les dents 121 du rotor intermédiaire 12, au deuxième alignement entre les dents 115 du plot statorique 112 et les dents 121 du rotor intermédiaire 12 entraîne un déplacement du rotor intermédiaire 12 par rapport au stator 11 d'une distance d₁ égale à p₁/N, soit ici p₁/4. De manière analogue, le passage du premier alignement entre les dents 122 du rotor intermédiaire 12 et les dents 135 du plot rotorique 131, au deuxième alignement entre les dents 122 du rotor intermédiaire 12 et les dents 135 du plot rotorique 132 entraîne un déplacement du rotor central 13 par rapport au rotor intermédiaire 12 d'une distance d₂ égale à p₂/N, soit ici p₂/4. Dans la mesure où la différence entre les pas p₁ et p₂ est relativement faible, le rotor intermédiaire 12 est entraîné dans un premier sens S₁, et le rotor central 13 est entraîné dans un deuxième sens S₂, opposé au premier. Ainsi, le mouvement résultant du rotor central 13 par rapport au stator 11 est inférieur à chacun des deux mouvements relatifs. La distance d₃ parcourue par le rotor central 13 par rapport au stator 11 est égale à la distance (d₂-d₁), c'est-à-dire (p₂-p₁)/N. Il s'ensuit que la distance d₃ peut être choisie aussi réduite qu'on le souhaite en choisissant des valeurs de pas p₁ et p₂ appropriées.

La figure 4 représente le moteur pas à pas 10 lors de la troisième phase, c'est-à-dire lorsque la bobine 116 du troisième plot statorique 113 est alimentée. Le rotor intermédiaire 12 et le rotor central 13 sont encore représentés en traits interrompus dans les positions qu'ils occupaient lors de la première phase. Lors de cette troisième phase, ce sont les dents 115 du plot statorique 113 qui viennent s'aligner avec des dents 121 du rotor intermédiaire 12, et les dents 135 du plot rotorique 133 qui viennent s'aligner avec des dents 122 du rotor intermédiaire 12. Le passage des alignements de la deuxième phase aux alignements de la troisième phase entraîne un nouveau déplacement du rotor intermédiaire 12 par rapport au stator 11 de distance d₁ et de sens S₁, et un nouveau déplacement du rotor central 13 par rapport au rotor intermédiaire 12 de distance d₂ et de sens S₂. Le rotor central 13 a donc subi un déplacement égal à 2.(d₂-d₁) depuis la première phase.

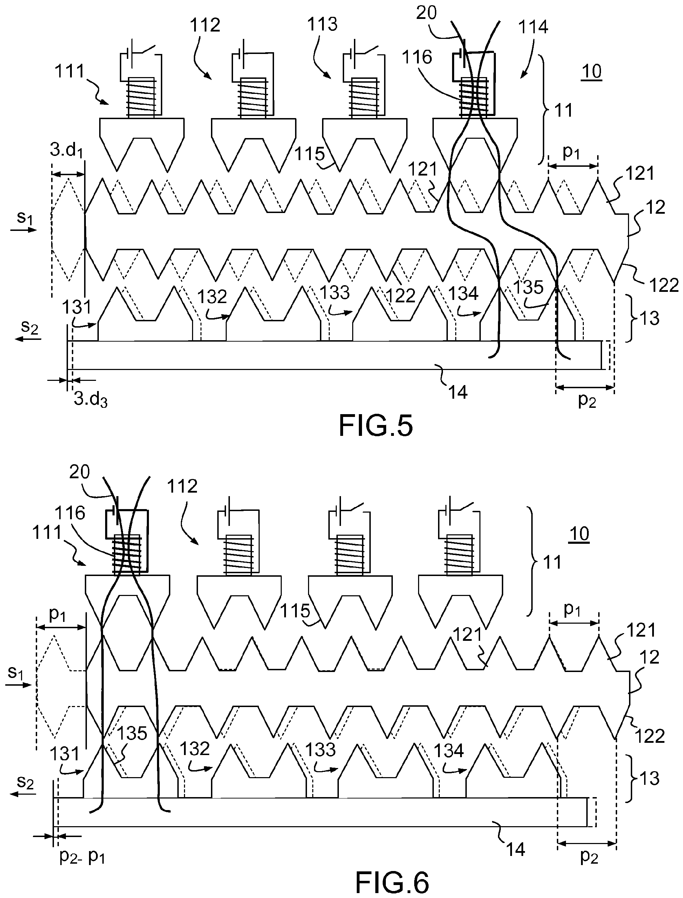

La figure 5 représente le moteur pas à pas 10 lors de la quatrième phase, c'est-à-dire lorsque la bobine 116 du quatrième plot statorique 114 est alimentée. Dans cette phase, les dents 115 du plot statorique 114 viennent s'aligner avec des dents 121 du rotor intermédiaire 12, et les dents 135 du plot rotorique 134 viennent s'aligner avec des dents 122 du rotor intermédiaire 12. Le passage des alignements de la troisième phase aux alignements de la troisième phase entraîne un nouveau déplacement du rotor intermédiaire 12 par rapport au stator 11 de distance d₁ et de sens S₁, et un nouveau déplacement du rotor central 13 par rapport au rotor intermédiaire 12 de distance d₂ et de sens S₂. Le rotor central 13 a donc subi un déplacement égal à 3.(d₂-d₁) depuis la première phase.

La figure 6 représente le moteur pas à pas 10 lors de la cinquième phase. Cette phase correspond en fait à la première phase, dans laquelle la bobine du premier plot statorique 111 est alimentée. Les mêmes alignements que ceux de la première phase sont obtenus. Les passages successifs de la première à la cinquième phase ont ainsi entraîné un déplacement du rotor intermédiaire 12 par rapport au stator 11 de distance p₁ - soit 4.d₁ - et de sens S₁, et un déplacement du rotor central 13 par rapport au rotor intermédiaire 12 de distance p₂ - soit 4.d₂ - et de sens S₂. En conséquence, le déplacement du rotor central 13 par rapport au stator 11 est égal à p₂-p₁.

L'exemple de réalisation du moteur pas à pas de la figure 1 peut être généralisé. En particulier, comme indiqué précédemment, l'invention peut être appliquée aux moteurs pas à pas rotatifs. Dans un tel cas, les mouvements des rotors sont des mouvements de rotation, et les pas considérés sont des pas angulaires. Par ailleurs, il a été considéré un nombre N de plots rotoriques et de plots statoriques égal à quatre. Le nombre N peut cependant prendre toute valeur entière supérieure ou égale à trois. De manière générale, chaque plot statorique et chaque plot rotorique peut comprendre une ou plusieurs dents. Avec a un entier représentant le nombre de dents de chaque plot statorique, les plots statoriques sont répartis sur le stator selon un pas égal à p₁(a+1/N). De même, avec b un entier représentant le nombre de dents de chaque plot rotorique, les plots rotoriques sont répartis sur le rotor selon un pas égal à p₂(b+1/N). De préférence, les plots rotoriques et statoriques comprennent le même nombre de dents. Lorsqu'un plot comprend une pluralité de dents, ces dents sont réparties selon le pas p₁ ou p₂, selon qu'il s'agit d'un plot statorique ou rotorique, respectivement. Chaque dent positionnée à l'extrémité de la pluralité de dents d'un plot statorique doit être à la distance p'₁ de l'une des dents d'un plot statorique consécutif. De même, chaque dent positionnée à l'extrémité de la pluralité de dents d'un plot rotorique doit être à la distance p'₂ de l'une des dents d'un plot rotorique consécutif. Les pas p'₁ et p'₂ ont été indiqués comme étant égaux à (1+1/N).p₁ et (1+1/N).p₂, respectivement. Néanmoins, du fait de la périodicité des dents du rotor intermédiaire et du rotor central, ces pas peuvent aussi être égaux à p₁/N et p₂/N, respectivement. Les dents du stator, du rotor intermédiaire et du rotor central ont été schématisées dans les figures 1 à 6 sous forme de triangles. Néanmoins, toute autre forme de dents peut être utilisée dans le cadre de l'invention. Plus généralement, les dents peuvent être remplacées par tout moyen apte à générer des positions présentant une réluctance inférieure à celle des autres positions. En particulier, des matériaux dont les propriétés électromagnétiques diffèrent peuvent être utilisés. À titre d'exemple, le pas p₂ peut être égal à 1,1 fois le pas p₁. La différence entre les pas p₁ et p₂ peut être ajustée en fonction de la résolution angulaire souhaitée entre le stator et le rotor central.

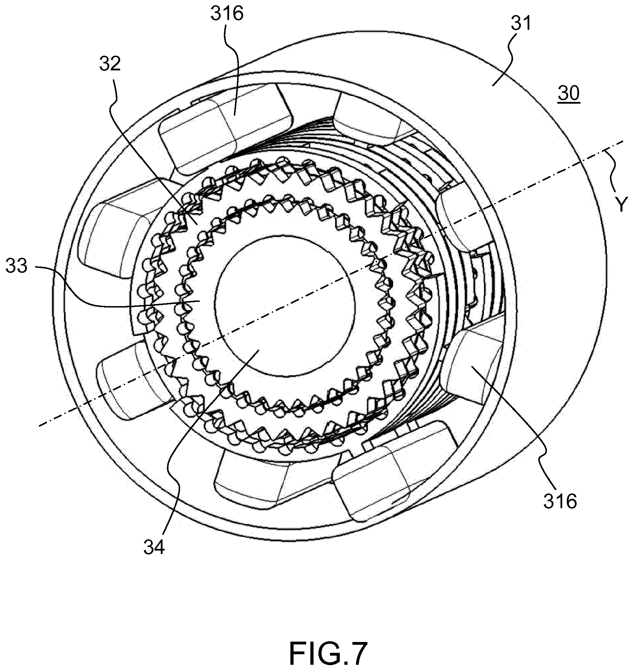

La figure 7 représente un deuxième exemple de réalisation d'un moteur pas à pas selon l'invention. Il s'agit ici d'un moteur pas à pas rotatif à reluctance variable et à rotors étagés. Le moteur pas à pas 30 comprend un stator 31, un rotor intermédiaire 32, et un rotor central 33 comportant un aimant permanent 34. L'aimant permanent 34 est solidaire du rotor central 33. Les rotors 32 et 33 sont en liaison pivot par rapport au stator 31 selon un axe Y.

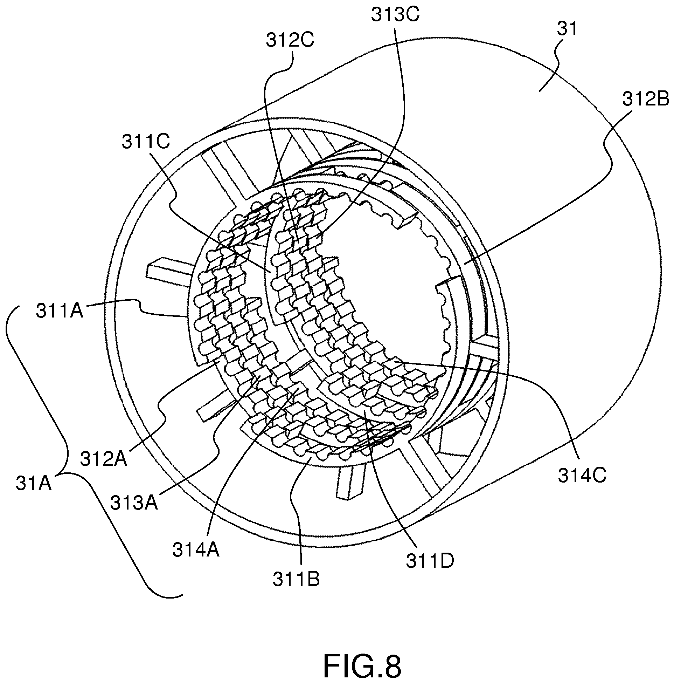

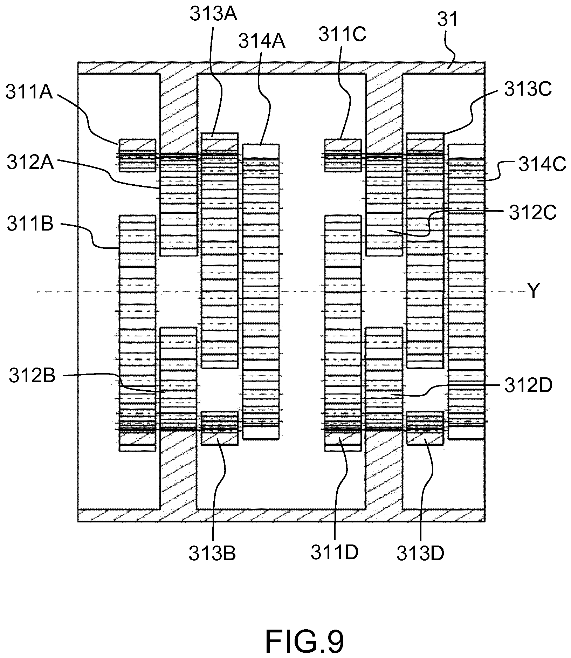

Les figures 8 et 9 représentent le stator 31 du moteur 30 de la figure 7 dans une vue en perspective et dans une vue en coupe selon l'axe Y, respectivement. Le stator 31 comprend quatre plots statoriques 311, 312, 313 et 314. Chaque plot statorique 311-314 comporte respectivement quatre portions d'anneau 311A-311D, 312A-312D, 313A-313D et 314A-314D. Ces portions d'anneau sont notées de manière générique 31A-31D. Chaque portion d'anneau 31C est décalée en translation selon l'axe Y de la portion d'anneau correspondante 31A. Les portions d'anneau 31B et 31D sont positionnées en regard de chaque portion d'anneau 31A et 31C, respectivement. Chaque portion d'anneau est dentée avec un même pas p₁. Les dents de la portion d'anneau 312A sont décalées angulairement des dents de la portion d'anneau 311A d'un pas p'₁. Le pas p'₁ est égal à 1/4.p₁. Plus généralement le décalage angulaire est égal à 1/N.p₁, où N est le nombre de plots statoriques. De même, les dents des portions d'anneau 313A et 314A sont décalées angulairement des dents des portions d'anneau 312A et 313A, respectivement, du pas p'₁. Il en va de même pour les portions d'anneau 311B-314B, 311C-314C, et 311D-314D. Les dents des portions d'anneau 31A sont alignées avec les dents des portions d'anneau respectives 31C, et les dents des portions d'anneau 31B sont alignées avec les dents des portions d'anneau 31D. Le stator comprend en outre huit bobines 316 alimentées par paire. Une première bobine 316 permet d'alimenter les portions d'anneau 311A et 311C. Une deuxième bobine 316 permet d'alimenter les portions d'anneau 311B et 311D. De manière analogue, les six autres bobines permettent d'alimenter individuellement les portions d'anneau 312A et 312C, 312B et 312D, 313A et 313C, 313B et 313D, 314A et 314C, et 314B et 314D.

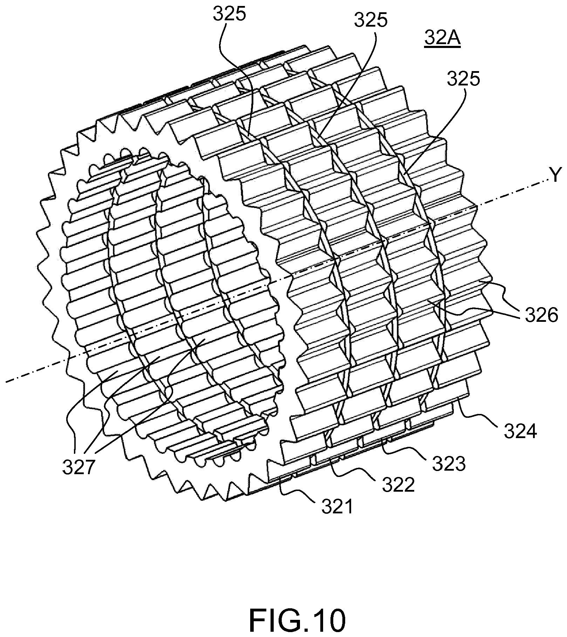

La figure 10 représente une partie 32A du rotor intermédiaire 32 dans une vue en perspective. La partie 32A comprend quatre anneaux concentriques, appelés étages 321 à 324, répartis le long de l'axe Y et solidaires en rotation selon l'axe Y. Le nombre d'étages de la partie 32A est égal au nombre N de plots statoriques. Les étages 321-324 sont isolés électromagnétiquement les uns des autres par des entretoises 325. La surface extérieure de chaque anneau 321-324 porte un ensemble de dents 326 réparties selon le pas p₁. Les dents 326 de chaque étage 321-324 sont alignées avec celles des autres étages. La surface intérieure de chaque anneau 321-324 porte un ensemble de dents 327 réparties selon le pas p₂. Les dents 327 de chaque étage 321-324 sont alignées avec celles des autres étages. Le rotor intermédiaire 32 comprend deux parties 32A et 32B solidaires en rotation selon l'axe Y. La partie 32B, non représentée, est identique à la partie 32A. La partie 32A vient s'aligner avec les portions d'anneau 31A et 31B, et la partie 32B vient s'aligner avec les portions d'anneau 31C et 31D. Plus précisément, les étages 321-324 de la partie 32A viennent respectivement en vis-à-vis des portions d'anneaux 311A et 311B, 312A et 312B, 313A et 313B, et 314A et 314B. Les étages 321-324 de la partie 32B viennent respectivement en vis-à-vis des portions d'anneau 311C et 311D, 312C et 312D, 313C et 313D, et 314C et 314D. Le rotor intermédiaire 32 est dimensionné de manière à ce que les dents 326 puissent coopérer avec les dents des portions d'anneau 31A-31D.

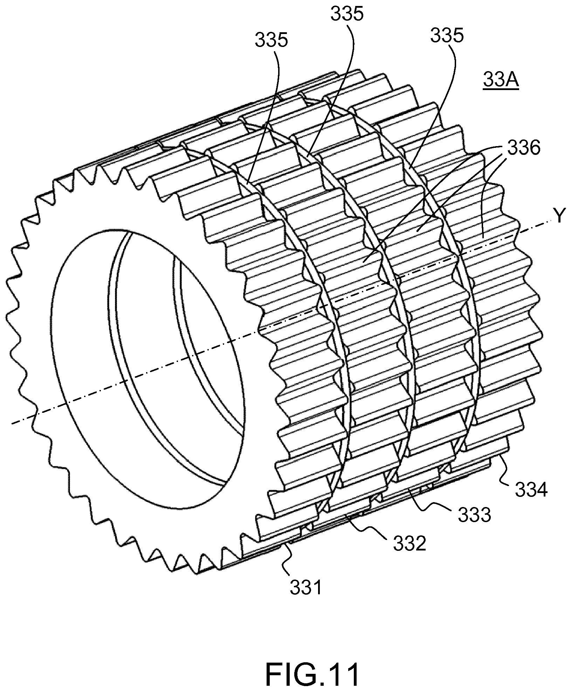

La figure 11 représente une partie 33A du rotor central 33 dans une vue en perspective. La partie 33A comprend quatre anneaux concentriques, appelés étages 331 à 334, répartis le long de l'axe Y et solidaires en rotation selon l'axe Y. Plus généralement, la partie 33A comprend autant d'étages que le nombre N de plots statoriques. Les étages 331-334 sont isolés électromagnétiquement les uns des autres par des entretoises 335. La surface extérieure de chaque anneau 331-334 porte un ensemble de dents 336 réparties selon le pas p₂. Les dents 336 de chaque étage 331-334 sont décalées d'un pas p'₂, égal à 1/4.p₂ ou, plus généralement, 1/N.p₂. Le rotor central comprend deux parties 33A et 33B solidaires en rotation selon l'axe Y. La partie 33B, non représentée, est identique à la partie 33A. La partie 33A vient s'aligner avec la partie 32A du rotor intermédiaire 32, et la partie 33B vient s'aligner avec la partie 32B du rotor intermédiaire 32. Le rotor central 33 est dimensionné de manière à ce que les dents 336 puissent coopérer avec les dents 327 du rotor intermédiaire 32. Le fonctionnement du moteur pas à pas 30 est ainsi analogue à celui du moteur pas à pas 10 illustré par les figures 1 à 6.

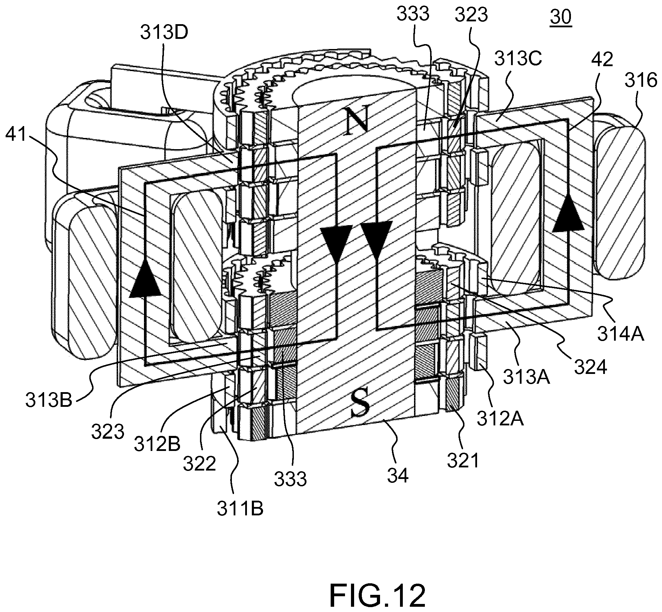

La figure 12 illustre, dans une vue en coupe longitudinale selon l'axe Y, le fonctionnement du moteur pas à pas 30 dans une troisième phase d'alimentation. Dans cette phase, les dents des portions d'anneau 313A, 313B, 313C et 313D sont alignées avec les dents 326 des anneaux 323 des deux parties 32A et 32B du rotor intermédiaire 32. En outre, les dents 327 de ces mêmes anneaux 323 sont alignées avec les dents 336 des anneaux 333 des deux parties 33A et 33B du rotor central 33. Des lignes de champ 41 et 42 peuvent ainsi circuler entre le stator 31, le rotor intermédiaire 32, le rotor central 33 et l'aimant permanent 34.

À la lecture de la figure 12, on comprend que le moteur pas à pas 30 pourrait être modifié sans sortir du cadre de l'invention. Par exemple, le rotor intermédiaire 32 et le rotor central 33 peuvent ne comporter qu'une seule partie de N étages, et le stator 31 peut ne comporter que les huit portions d'anneau 31A et 31B. Les lignes de champ s'établissent alors entre les portions d'anneau 31A et 31B. À l'inverse, le moteur pas à pas peut ne comporter que les portions d'anneau 31A et 31C, ou 31B et 31D. Les deux parties de rotor intermédiaire 32 et de rotor central 33 sont alors nécessaires. Par ailleurs, le nombre N d'étages et de plots statoriques peut prendre toute valeur entière supérieure ou égale à 3. De plus les formes des dents peuvent différer de celles représentées sur les figures 7 à 11.

## Revendications

1. Moteur pas à pas comprenant :
• un stator (11, 31) comprenant N plots statoriques (111-114, 311-314), où N est un entier supérieur ou égal à trois,
• un premier rotor (12, 32) apte à se déplacer par rapport au stator (11, 31) selon un axe (X, Y), le premier rotor (12, 32) comprenant un premier ensemble de dents (121) réparties selon un premier pas p₁, et un deuxième ensemble de dents (122) réparties selon un deuxième pas p₂, et
• un deuxième rotor (13, 33) apte à se déplacer par rapport au premier rotor (12, 32) selon l'axe (X, Y), le deuxième rotor (13, 33) comprenant N plots rotoriques (131-134, 311-314),
**caractérisé en ce que**
les N plots statoriques (111-114, 311-314) comprenant une pluralité a de dents réparties selon le pas p₁, où a est un entier représentant le nombre de dents de chaque plot statorique, les N plots statoriques (111-114, 311-314) étant répartis sur le stator (11, 31) selon un troisième pas égal à p₁(a+1/N), les dents (121) du premier ensemble étant aptes à venir s'aligner individuellement avec l'un des plots statoriques (111-114, 311-314), le passage d'un alignement à un alignement consécutif entraînant un déplacement du premier rotor (12, 32) par rapport au stator (11, 31) dans un premier sens (S₁) avec le pas p₁/N,
et **en ce que**
les N plots rotoriques (131-134, 311-314) comprenant une pluralité b de dents réparties selon le pas p₂, où b est un entier représentant le nombre de dents de chaque plot rotorique, les N plots rotoriques (131-134, 311-314) étant répartis sur le deuxième rotor (13, 33) selon un quatrième pas égal à p₂(b+1/N) et étant aptes à venir s'aligner individuellement avec l'une des dents (122) du deuxième ensemble, le passage d'un alignement à un alignement consécutif entraînant un déplacement du deuxième rotor (13, 33) par rapport au premier rotor (12, 32) dans un deuxième sens (S₂), opposé au premier, avec le pas p₂/N.

2. Moteur pas à pas selon la revendication 1, dont le troisième pas et le quatrième pas ont une même valeur, et dont les mouvements entre le stator (31), le premier rotor (32), et le deuxième rotor (33) sont des mouvements de rotation selon l'axe (Y).

3. Moteur pas à pas selon la revendication 2, dans lequel chaque plot statorique (311-314) comprend une première portion d'anneau (31A) dont une surface intérieure est dentée avec le pas p₁, les dents de la portion d'anneau étant aptes à venir s'aligner avec des dents (326) du premier ensemble du premier rotor (32).

4. Moteur pas à pas selon la revendication 3, dans lequel chaque plot statorique (311-314) comprend une deuxième portion d'anneau (31B) dont une surface intérieure est dentée avec le pas p₁, la deuxième portion d'anneau (31B) étant disposée symétriquement selon l'axe (Y) par rapport à la première portion d'anneau (31A), les dents de la deuxième portion d'anneau (31B) étant aptes à venir s'aligner avec des dents (326) du premier ensemble du premier rotor (32).

5. Moteur pas à pas selon la revendication 4, dans lequel le premier rotor (32) et le deuxième rotor (33) comportent chacun N anneaux concentriques (321-324, 331-334) répartis le long de l'axe (Y) et isolés électromagnétiquement les uns des autres, les première et deuxième portions d'anneau (31A, 31B) de chaque plot statorique (311-314) s'alignant avec l'un des anneaux (321-324) du premier rotor (32) et avec l'un des anneaux (331-334) du deuxième rotor (33), de manière à permettre la circulation d'un champ magnétique entre la première portion d'anneau (31A) et la deuxième portion d'anneau (31B).

6. Moteur pas à pas selon la revendication 2, dans lequel le premier rotor (32) comprend deux parties (32A, 32B) solidaires en rotation selon l'axe (Y), chaque partie comportant N anneaux concentriques (321-324) répartis le long de l'axe (Y) et isolés électromagnétiquement les uns des autres, une surface extérieure de chaque anneau comprenant des dents réparties selon le pas p₁ et alignées entre les différents anneaux, une surface intérieure de chaque anneau comprenant des dents réparties selon le pas p₂ et alignées entre les différents anneaux, le deuxième rotor (33) comprenant deux parties (33A, 33B) solidaires en rotation selon l'axe (Y), chaque partie du deuxième rotor comportant N anneaux concentriques (331-334) répartis le long de l'axe (Y) et isolés électromagnétiquement les uns des autres, une surface extérieure de chaque anneau comprenant des dents réparties selon le pas p₂ et décalées par rapport aux dents des autres anneaux du pas p'₂, chaque anneau (321-324) du premier rotor (32) venant s'aligner avec l'un des anneaux (331-334) du deuxième rotor (33).

7. Moteur pas à pas selon la revendication 6, dans lequel chaque plot statorique (311-314) comprend quatre portions d'anneau (31A-31D) concentriques, chaque portion d'anneau étant dentée avec le pas p₁, pour chaque plot statorique, une première portion d'anneau (31A) et une deuxième portion d'anneau (31B) étant disposées symétriquement selon l'axe (Y) et venant coopérer avec l'un des anneaux (321-324) de la première partie (32A) du premier rotor (32) et avec l'un des anneaux (331-334) de la première partie (33A) du deuxième rotor (33), une troisième portion d'anneau (31B) et une quatrième portion d'anneau (31D) étant disposées symétriquement selon l'axe (Y) et venant coopérer avec l'un des anneaux (321-324) de la deuxième partie (32B) du premier rotor (32) et avec l'un des anneaux (331-334) de la deuxième partie (33B) du deuxième rotor (33).

## Patentansprüche

1. Schrittschaltmotor, Folgendes beinhaltend:
▪ einen Stator (11, 31), beinhaltend N Statorkontakte (111-114, 311-314), wobei N eine Ganzzahl gleich oder größer als drei ist,
▪ einen ersten Rotor (12, 32), welcher in der Lage ist, sich in Bezug auf den Stator (11, 31) entlang einer Achse (X, Y) zu bewegen, wobei der erste Rotor (12, 32) eine erste Gruppe von Zähnen (121) beinhaltet, welche mit einem ersten Abstand p₁ verteilt sind, und eine zweite Gruppe von Zähnen (122), welche mit einem zweiten Abstand p₂ verteilt sind, und
▪ einen zweiten Rotor (13, 33), welcher in der Lage ist, sich in Bezug auf den ersten Rotor (12, 32) entlang der Achse (X, Y) zu bewegen, wobei der zweite Rotor (13, 33) N Rotorkontakte (131-134, 311-314) beinhaltet,
**dadurch gekennzeichnet, dass**
die N Statorkontakte (111-114, 311-314) eine Vielzahl a von mit dem Abstand p₁ verteilten Zähnen beinhaltet, wobei a eine Ganzzahl ist, welche die Anzahl der Zähne eines jeden Statorkontakts darstellt, wobei die N Statorkontakte (111-114, 311-314) an dem Stator (11, 31) mit einem dritten Abstand gleich p₁(a+1/N) verteilt sind, wobei die Zähne (121) der ersten Gruppe in der Lage sind, sich einzeln mit einem der Statorkontakte (111-114, 311-314) auszufluchten, wobei der Übergang von einer Ausfluchtung zu einer nächsten Ausfluchtung eine Bewegung des ersten Rotors (12, 32) in Bezug auf den Stator (11, 31) in einer ersten Richtung (S₁) mit dem Abstand p₁/N bewirkt,
und dadurch, dass
die N Rotorkontakte (131-134, 311-314) eine Vielzahl b von mit dem Abstand p₂ verteilten Zähnen beinhaltet, wobei b eine Ganzzahl ist, welche die Anzahl der Zähne eines jeden Rotorkontakts darstellt, wobei die N Rotorkontakte (131-134, 311-314) an dem zweiten Rotor (13, 33) mit einem vierten Abstand gleich p₂(b+1/N) verteilt und in der Lage sind, sich einzeln mit einem der Zähne (122) der zweiten Gruppe auszufluchten, wobei der Übergang von einer Ausfluchtung zu einer nächsten Ausfluchtung eine Bewegung des zweiten Rotors (13, 33) in Bezug auf den ersten Rotor (12, 32) in einer zweiten, der ersten Richtung abgewandten Richtung (S₂), mit dem Abstand p₂/N bewirkt.

2. Schrittmotor nach Anspruch 1, dessen dritter und vierter Abstand denselben Wert aufweisen, und dessen Bewegungen zwischen dem Stator (31), dem ersten Rotor (32) und dem zweiten Rotor (33) Drehbewegungen entlang der Achse (Y) sind.

3. Schrittmotor nach Anspruch 2, bei welchem jeder Statorkontakt (311-314) einen ersten Ringabschnitt (31A) beinhaltet, von welchem eine Innenfläche mit dem Abstand p₁ gezahnt ist, wobei die Zähne des Ringabschnitts in der Lage sind, sich mit Zähnen (326) der ersten Gruppe des ersten Rotors (32) auszufluchten.

4. Schrittmotor nach Anspruch 3, bei welchem jeder Statorkontakt (311-314) einen zweiten Ringabschnitt (31B) beinhaltet, von welchem eine Innenfläche mit dem Abstand p₁ gezahnt ist, wobei der zweite Ringabschnitt (31B) symmetrisch entlang der Achse (Y) in Bezug auf den ersten Ringabschnitt (31A) angeordnet ist, wobei die Zähne des zweiten Ringabschnitts (31B) in der Lage sind, sich mit Zähnen (326) der ersten Gruppe des ersten Rotors (32) auszufluchten.

5. Schrittmotor nach Anspruch 4, bei welchem der erste Rotor (32) und der zweite Rotor (33) jeweils N konzentrische Ringe (321-324, 331-334) beinhalten, welche entlang der Achse (Y) verteilt und einander gegenüber elektromagnetisch isoliert sind, wobei der erste und der zweite Ringabschnitt (31A, 31B) eines jeden Statorkontakts (311-314) sich mit einem der Ringe (321-324) des ersten Rotors (32) und mit einem der Ringe (331-334) das zweiten Rotors (33) so ausfluchten, dass die Zirkulation eines magnetischen Feldes zwischen dem ersten Ringabschnitt (31A) und dem zweiten Ringabschnitt (31B) ermöglicht wird.

6. Schrittmotor nach Anspruch 2, bei welchem der erste Rotor (32) zwei Abschnitte (32A, 32B) beinhaltet, welche beim Drehen entlang der Achse (Y) fest verbunden sind, wobei jeder Abschnitt N konzentrische Ringe (321-324) beinhaltet, welche entlang der Achse (Y) verteilt und einander gegenüber elektromagnetisch isoliert sind, wobei eine Außenfläche eines jeden Ringes Zähne beinhaltet, welche mit dem Abstand p₁ verteilt und zwischen den unterschiedlichen Ringen ausgefluchtet sind, wobei eine Innenfläche eines jeden Ringes Zähne beinhaltet, welche mit dem Abstand p₂ verteilt und zwischen den unterschiedlichen Ringen ausgefluchtet sind, wobei der zweite Rotor (33) zwei Abschnitte (33A, 33B) beinhaltet, welche beim Drehen entlang der Achse (Y) fest verbunden sind, wobei jeder Abschnitt des zweiten Rotors N konzentrische Ringe (331-334) beinhaltet, welche entlang der Achse (Y) verteilt und einander gegenüber elektromagnetisch isoliert sind, wobei eine Außenfläche eines jeden Ringes Zähne beinhaltet, welche mit dem Abstand p₂ verteilt und in Bezug auf die Zähne der anderen Ringe um den Abstand p'₂ versetzt sind, wobei jeder Ring (321-324) des ersten Rotors (32) sich mit einem der Ringe (331-334) des zweiten Rotors (33) ausfluchtet.

7. Schrittmotor nach Anspruch 6, bei welchem jeder Statorkontakt (311-314) vier konzentrische Ringabschnitte (31A-31D) beinhaltet, wobei jeder Ringabschnitt mit dem Abstand p₁ für jeden Statorkontakt gezahnt ist, wobei ein erster Ringabschnitt (31A) und ein zweiter Ringabschnitt (31B) symmetrisch entlang der Achse (Y) angeordnet sind und mit einem der Ringe (321-324) des ersten Abschnittes (32A) des ersten Rotors (32) und mit einem der Ringe (331-334) des ersten Abschnittes (33A) des zweiten Rotors (33) zusammenarbeiten, wobei ein dritter Ringabschnitt (31B) und ein vierter Ringabschnitt (31D) symmetrisch entlang der Achse (Y) angeordnet sind und mit einem der Ringe (321-324) des zweiten Abschnittes (32B) des ersten Rotors (32) und mit einem der Ringe (331-334) des zweiten Abschnitts (33B) des zweiten Rotors (33) zusammenarbeiten.

## Claims

1. Stepping motor comprising:
▪ a stator (11, 31) comprising N stator contacts (111-114, 311-314), where N is an integer greater than or equal to three,
▪ a first rotor (12, 32) which is able to move with respect to the stator (11, 31) about an axis (X, Y), the first rotor (12, 32) comprising a first set of teeth (121) distributed at a first pitch p₁, and a second set of teeth (122) distributed at a second pitch P₂, and
▪ a second rotor (13, 33) which is able to move with respect to the first rotor (12, 32) about the axis (X, Y), the second rotor (13, 33) comprising N rotor contacts (131-134, 311-314),
**characterized in that**
the N stator contacts (111-114, 311-314) comprising a plurality a of teeth distributed at the pitch p₁, where a is an integer representing the number of teeth of each rotor contact, the N stator contacts (111-114, 311-314) being distributed on the stator (11, 31) at a third pitch equal to p₁(a+1/N), the teeth (121) of the first set being able to be aligned individually with one of the stator contacts (111-114, 311-314), the passage from one alignment to a consecutive alignment causing the first rotor (12, 32) to move in a first direction (S₁) with respect to the stator (11, 31) by the pitch p₁/N,
and **in that**
the N rotor contacts (131-134, 311-314) comprising a plurality b of teeth distributed at the pitch p₂, where b is an integer representing the number of teeth of each rotor contact, the N rotor contacts (131-134, 311-314) being distributed on the second rotor (13, 33) at a fourth pitch equal to p₂(b+1/N) and being able to be aligned individually with one of the teeth (122) of the second set, the passage from one alignment to a consecutive alignment causing the second rotor (13, 33) to move in a second direction (S₂), opposite to the first direction, with respect to the first rotor (12, 32) by the pitch p₂/N.

2. Stepping motor according to Claim 1, wherein the third pitch and the fourth pitch have the same value, and wherein the movements between the stator (31), the first rotor (32) and the second rotor (33) are rotational movements about the axis (Y).

3. Stepping motor according to Claim 2, wherein each stator contact (311-314) comprises a first ring portion (31A), an internal surface of which is toothed with the pitch p₁, the teeth of the ring portion being able to be aligned with teeth (326) of the first set of the first rotor (32).

4. Stepping motor according to Claim 3, wherein each stator contact (311-314) comprises a second ring portion (31B), an internal surface of which is toothed with the pitch p₁, the second ring portion (31B) being disposed symmetrically about the axis (Y) with respect to the first ring portion (31A), the teeth of the second ring portion (31B) being able to be aligned with teeth (326) of the first set of the first rotor (32).

5. Stepping motor according to Claim 4, wherein the first rotor (32) and the second rotor (33) each have N concentric rings (321-324, 331-334) distributed along the axis (Y) and electromagnetically isolated from one another, the first and second ring portions (31A, 31B) of each stator contact (311-314) being aligned with one of the rings (321-324) of the first rotor (32) and with one of the rings (331-334) of the second rotor (33) so as to allow a magnetic field to flow between the first ring portion (31A) and the second ring portion (31B).

6. Stepping motor according to Claim 2, wherein the first rotor (32) comprises two parts (32A, 32B) that rotate as one about the axis (Y), each part having N concentric rings (321-324) distributed along the axis (Y) and electromagnetically isolated from one another, an external surface of each ring comprising teeth distributed at the pitch p₁ and aligned between the various rings, an internal surface of each ring comprising teeth distributed at the pitch p₂ and aligned between the various rings, the second rotor (33) comprising two parts (33A, 33B) that rotate as one about the axis (Y), each part of the second rotor having N concentric rings (331-334) distributed along the axis (Y) and electromagnetically isolated from one another, an external surface of each ring comprising teeth distributed at the pitch p₂ and offset with respect to the teeth of the other rings by the pitch p'₂, each ring (321-324) of the first rotor (32) being aligned with one of the rings (331-334) of the second rotor (33).

7. Stepping motor according to Claim 6, wherein each stator contact (311-314) comprises four concentric ring portions (31A-31D), each ring portion being toothed with the pitch p₁, for each stator contact, a first ring portion (31A) and a second ring portion (31B) being disposed symmetrically about the axis (Y) and cooperating with one of the rings (321-324) of the first part (32A) of the first rotor (32) and with one of the rings (331-334) of the first part (33A) of the second rotor (33), a third ring portion (31B) and a fourth ring portion (31D) being disposed symmetrically about the axis (Y) and cooperating with one of the rings (321-324) of the second part (32B) of the first rotor (32) and with one of the rings (331-334) of the second part (33B) of the second rotor (33).
